# EUROPÄISCHE PATENTSCHRIFT

(11) **EP 0 346 864 B1**
(45) Veröffentlichungstag und Bekanntmachung des Hinweises auf die Patenterteilung: **16.03.1994**
(21) Anmeldenummer: 89110786.4
(22) Anmeldetag: 14.06.1989
(51) Int. Cl.: B27N 3/00, C08L 97/02

(54) **Verfahren zur Herstellung von mehrschichtigen Spanplatten**
Production method for multi-layered fibre boards
Méthode de fabrication des panneaux de fibres de bois multicouches

(30) Priorität: 15.06.1988 DE 3820376
(43) Veröffentlichungstag der Anmeldung: 20.12.1989
(73) Patentinhaber: GLUNZ AG, 59063 Hamm (DE)
(72) Erfinder: Kurt, Ernst, Ing. grad., D-3400 Göttingen (DE)
(74) Vertreter: Rehberg, Elmar, Dipl.-Ing.

(56) Entgegenhaltungen:
- EP-A- 0 005 533
- EP-A- 0 012 169
- EP-A- 0 037 878
- AT-B- 270 189
- CA-A- 1 176 778

## Beschreibung

Die Erfindung bezieht sich auf ein Verfahren zur Herstellung von mehrschichtigen Spanplatten durch Heißverpressen von mit Bindemitteln versetzten Holzspänen, wobei in der KernschichtIsocyanat als Bindemittel in Kombination mit formaldehydbindenden Mittel, wie Harnstoff, Melamin, Dicyandiamid o. dgl. eingesetzt wird. Derartige Spanplatten werden überwiegend mehrschichtig hergestellt, wobei neben einer Kernschicht zwei Deckschichten Verwendung finden, die die Platte nach außen begrenzen. In den Deckschichten werden Holzspäne mit wesentlich kleineren Abmessungen eingesetzt, um insbesondere die Oberfläche der Spanplatten zu verbessern.

Aus der EP-B-12 169 ist eine mehrschichtige, vorwiegend aminoplastgebundene Span- oder Faserplatte bekannt, deren Herstellung nach den im Oberbegriff des Anspruchs 1 angegebenen Merkmalen möglich erscheint. In der Kernschicht wird dabei ein nicht zur Gruppe der Aminoplaste gehörendes Bindemittel, z. B. Diisocyanat, eingesetzt bzw. solche Bindemittel, deren Aushärtung durch die Anwesenheit von zusätzlichen formaldehydreaktiven Stoffen nicht beeinträchtigt wird. Zusammen mit diesem Bindemittel wird also in die Kernschicht ein formaldehydbindendes Mittel, wie z. B. Harnstoff, Melamin, Dicyandiamid o. dgl. eingebracht. Diese Stoffe reagieren nach dem Pressen der Platte mit dem noch vorhandenen oder freiwerdenden Formaldehyd unter Feuchte- und/oder Wärmeeinwirkung, so daß die Formaldehydabgabe erheblich vermindert wird. Der wären des Heißpressens aus den aminoplastgebundenen Deckschichten freiwerdende Formaldehyd wandert mit dem Dampf in Richtung auf die Plattenmitte, also die Kernschicht, wo der Dampf zunächst kondensiert und dem Formaldehyd auch die Möglichkeit bietet, sich in dem Kondensat zu lösen. Es ist auch möglich, nicht nur der Kernschicht, sondern weiteren Schichten, die mit Harzen gebunden sind, die formaldehydbindenden Stoffe beizumengen, beispielsweise auch den Mittelschichten einer fünfschichtigen Platte. Ein Teil der aminoplastgebundenen Deckschichten wird bei dem üblichen Beschleifen und Kallibrieten der Platten weggeschliffen. Besondere Trenndeckschichten sind hier nicht vorgesehen.

Auch aus der OE-PS 270 189 ist es bei der Herstellung mehrschichtiger Spanplatten bekannt, in der Kernschicht Isocyanat als Bindemittel anzuwenden, während in den übrigen Schichten, also in den Deckschichten, übliche Bindemittel, wie z. B. Harnstoff-, Melamin- oder Phenolformaldehydharz eingesetzt werden. Wenn die Deckschichten allein mit Phenolformaldehydharz gebunden sind, geben diese Platten etwa 0,03 ppm Formaldehyd ab.

Für die Herstellung von Spanplatten werden in der Praxis bisher überwiegend als Bindemittel Harnstoff-Formaldehydkondensationsharze eingesetzt. Diese werden auch als Aminoplaste bezeichnet und sind für die Herstellung von Spanplatten des Normtyps V20 in DIN 68763 vorgeschrieben. Der Nachteil dieses Bindemittels liegt bekanntlich in seiner nachträglichen Formaldehydabgabe. Die Intensität der Formaldehydabgabe aus aminoplastgebundenen Spanplatten hängt von verschiedenen Faktoren ab, wie Molverhältnis von Harnstoff zu Formaldehydharz, Preßzeit, Bindemittelaufwand, Alter der Spanplatten usw. Durch die Formaldehydabgabe aus den Spanplatten kann bei ihrer Verwendung in Aufenthaltsräumen eine Geruchsbelästigung eintreten. Die verschiedenen Verfahren zur Verminderung der Formaldehydabgabe bei aminoplastgebundenen Spanplatten sind in der Zeitschrift "Holz als Roh- und Werkstoff 40 (1982)" S. 249 bis 253 beschrieben. Dort werden auch zusammen mit den Aminoplasten formaldehydbindende Mittel wie z. B. Harnstoff, Melamin oder Isocyanat zum Härter oder zum Leimharz zugesetzt. Da infolge der Verwendung der Aminoplaste die Dosierung des formaldehydbindenden Mittels entsprechend hoch gewählt werden muß, tritt in nachteiliger Weise als Nebeneffekt eine Festigkeitsminderung auf.

Aus der DE-AS 28 51 589 ist es bekannt, anstelle der Aminoplaste andere Bindemittel einzusetzen, die kein oder nur ein geringes Formaldehydabgabe-Potential haben, wie z. B. die Isocyanate oder Phenol-Formaldehydharze. Formaldehydabgabemessungen an Spanplatten, die mit Phenol-Formaldehydharz gebunden sind, zeigen eine sehr niedrige Formaldehydabgabe von etwa 0,02 ppm. Erstaunlicherweise verfügen auch Spanplatten, die mit dem formaldehydfreien Diisocyanat gebunden sind, ebenfalls über eine Formaldehydabgabe, die bis 0,04 ppm betragen kann (Marutzky, R. und Flentge, A. Zeitschrift "Holz- und Kunststoffverarbeitung 1/85"). Diese Tatsache ist vermutlich auf die Holzspänetrocknung bei der Spanplattenherstellung zurückzuführen. Dabei entsteht nachweislich Formaldehyd (May, Mehlkorn, Merntzky "Gefahrlose Spänetrocknung bei der Spanplattenfertigung" S. 42 VDI-Verlag 1981). Der Formaldehyd wird von den Holzspänen bei der Trocknung teilweise aufgenommen und später wieder abgegeben.

Aus der DE-OS 36 29 586 ist ein Verfahren zur Herstellung von Holzfaserplatten bekannt, bei dem der bisherige Abschliffverlust des hochwertigen Fasermaterials vermieden wird. Hierzu wird die Deckschicht aus dem Holzfasermaterial in ihrer Dicke um die abzuschleifende Schicht reduziert und durch preiswerteren Holzstaub ersetzt, der mitverpreßt und anschließend abgeschliffen wird. Auf die Verminderung oder gar Beseitigung der Formaldehydabgabe hat dies keinen Einfluß.

Der Erfindung liegt die Aufgabe zugrunde, ein Verfahren der eingangs beschriebenen Art derart weiterzubilden, daß Spanplatten entstehen, die praktisch keine Formaldehydabspaltung aufweisen. Eine eventuelle Formaldehydabgabe soll geringer sein, als es derNachweisbarkeitsgrenze heute bekannter Meßverfahren entspricht.

Erfindungsgemäß wird dies dadurch erreicht, daß in Deckschichten Isocyanat als Bindemittel verwendet wird, daß in der Kernschicht ein formaldehydbindendes Mittel, wie Harnstoff, Melamin, Diisocyanat o. dgl. zugesetzt wird, und daß außen Trenndeckschichten, die mit Phenolharz gebunden sind, aufgebracht und nach dem Aushärten wieder entfernt werden. Durch die Verwendung von Isocyanat als Bindemittel in den Deckschichten der fertigen Platten, die während der Herstellung als Zwischenschichten erscheinen, wird kein Formaldehyd in die Platte eingetragen, so daß in diesen Deckschichten wie in der Kernschicht nur die geringen Anteile Formaldehyd vorhanden sein können, die aus der Spänetrocknung stammen. Die Trennschwierigkeiten von Isocyanat mit den Preßblechen in der Presse werden dadurch vermieden, daß die Deckschichten als Zwischenschichten mit den Preßblechen nicht in Berührung kommen, weil zusätzliche Trenndeckschichten Verwendung finden. In diesen Trenndeckschichten wird Phenolharz als Bindemittel eingesetzt, welches wiederum zwei Vorteile hat. Einmal erlaubt es eine problemlose Trennung der Spanplatten von den Preßblechen und zum anderen gibt es beim Heißverpressen nur einen sehr geringen Anteil Formaldehyd an die übrigen Schichten der Platte ab. Beim Preßvorgang wandert ein Teil dieses Formaldehyds mit dem Wasserdampf in Richtung Plattenmitte und löst sich dort in dem Kondensat. Das formaldehydbindende Mittel in der Kernschicht hat somit die Aufgabe, diesen Formaldehyd zu fangen und zu absorbieren, so daß er später nicht mehr abgegeben werden kann. Da die Anteile Formaldehyd äußerst gering sind, kann auch das formaldehydbindende Mittel in entsprechend kleiner Konzentration den Spänen der Kernschicht hinzugefügt werden, so daß die bei höherer Konzentration bekannte Festigkeitsminderung der Spanplatte vermieden wird. Das formaldehydbindende Mittel nimmt auch den Formaldehyd aus der Spänetrocknung auf. Die phenolharzgebundenen Trenndeckschichten weisen, wie an sich bei Einsatz von Phenolharz in Deckschichten bekannt, eine dunkle Färbung auf, die die Weiterverarbeitung solcher mit Phenolharz gebundenen Deckschichten versehener Platten z. B. beim Furnieren, Einfärben o. dgl. stört. Da jetzt jedoch das Phenolharz in Trenndeckschichten eingesetzt wird, die nach dem Aushärten der Platten entfernt werden, werden die als Zwischenschichten eingesetzt und mit Isocyanat gebundenen Deckschichten dann als äußere Schichten der Spanplatte frei. Diese weisen ein helles und damit weiterverarbeitungsfreundliches Aussehen auf. Die nachträgliche Formaldehydabgabe von derart hergestellten Spanplatten fällt überraschenderweise auf Null bzw. unter eine Nachweisgrenze, wenn ein oder mehrere formaldehydbindende Mittel als Fängersubstanzen in der Kernschicht vorhanden sind und der Gewichtsanteil des restlichen Formaldehyds sehr gering gehalten wird. Die Verringerung der Formaldehydrestmenge unter die erforderliche Grenzkonzentration erfolgt durch die Kombination verschiedener Merkmale: zumindest in der Kernschicht wird ein formaldehydfreies Bindemittel eingesetzt. In Trenndeckschichten wird Phenol-Formaldehydharz benutzt. Diese Trenndeckschichten werden nach dem Aushärten wieder entfernt. Damit wird zwar während der Herstellung ein erhöhter Aufwand betrieben. Dieser rechtfertigt sich jedoch im Hinblick auf die Formaldehydfreiheit der damit herstellbaren Platten.

Es ist möglich, daß die Trenndeckschichten ganz und die Deckschichten teilweise entfernt werden. Damit ist sichergestellt, die Entfernung der Schichten bis in eine solche Tiefe durchzuführen, daß die an der Spanplatte verbleibenden Deckschichten ein helles Aussehen aufweisen und andererseits mit Isocyanat gebunden sind. Die Entfernung der Trenndeckschichten und die teilweise der Deckschichten kann durch Schleifen erfolgen. Ein Schleifvorgang der Spanplatten ist an sich üblich und ohnehin erforderlich, um die Dimensionen und die Oberflächenglattheit einzuhalten.

Auch in den Deckschichten kann ein formaldehydbindendes Mittel, wie Harnstoff, Melamin, Diisocyanat o. dgl. zugesetzt werden, damit auch der Formaldehyd, der beim Heißpressen aus den phenolharzgebundenen Trenndeckschichten in die Deckschichten einwandert, an dieser Stelle bereits gebunden wird. Durch die Verteilung des formaldehydbindenden Mittels nicht nur auf die Kernschicht, sondern auch auf die Deckschichten, kann die Konzentration in der gesamten Platte noch etwas geringer gewählt werden.

Die Trenndeckschichten und die Deckschichten werden zweckmäßig so eingestreut, daß nach dem Heißverpressen die Trenndeckschichten eine Dicke von 0,2 bis 0,7 - vorzugsweise 0,3 bis 0,6 mm - und die Deckschichten eine Dicke von etwa 1,0 bis 1,5 mm aufweisen.

Ein Ausführungsführungsbeispiel einer mit dem erfindungsgemäßen Verfahren hergestellten Spanplatte ist in den Zeichnungen dargestellt. Es zeigen:
- Figur 1: einen Ausschnitt aus dem Aufbau einer Spanplatte unmittelbar nach dem Heißverpressen und
- Figur 2: einen Ausschnitt aus der Spanplatte nach der Entfernung der Trenndeckschichten.

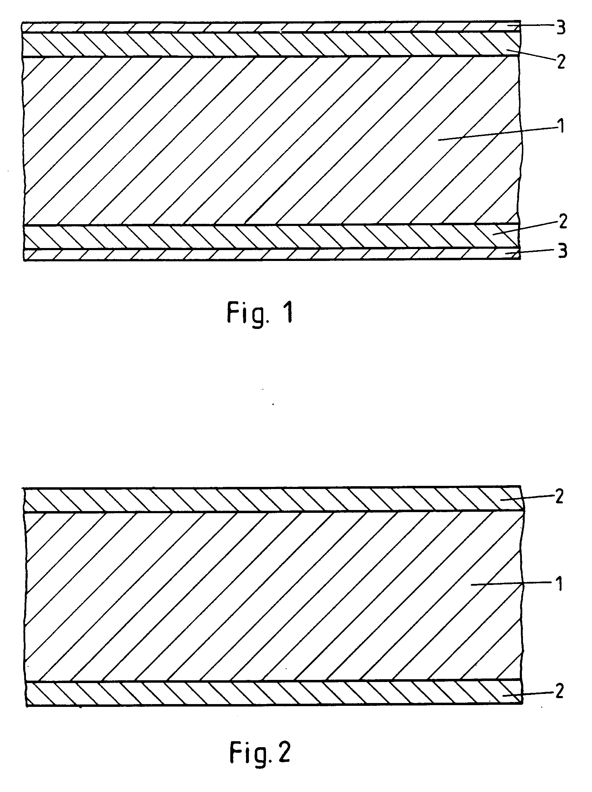

Die in Figur 1 dargestellte Spanplatte weist von innen nach außen folgenden symmetrisch angeordneten Aufbau auf. In der Mitte ist eine Kernschicht 1 angeordnet, die mit Isocyanat als Bindemittel gebunden ist. Außerdem ist in der Kernschicht 1 ein formaldehydbindendes Mittel, beispielsweise Harnstoff, Melamin, Diisocyanat o. dgl. in einem vergleichsweise geringen Anteil vorgesehen. An die Kernschicht 1 schließen sich beidseitig identisch ausgebildete Deckschichten 2 an, die ebenfalls mit Isocyanat gebunden sind. Auch in diesen Deckschichten 2 ist das formaldehydbindende Mittel enthalten. Außen sind Trenndeckschichten 3 angeordnet, die mit Phenolharz verleimt sind. Eine solche Spanplatte wird von unten nach oben in dem entsprechenden Schichtenaufbau aufgestreut und unter Anwendung von Wärme und Druck in der Presse verpreßt, wobei die Aushärtung geschieht und die Spanplatte den in Figur 1 dargestellten Aufbau aufweist. Anschließend werden zumindest die Trenndeckschichten 3 sowie ggf. ein kleiner Teil der Deckschichten 2 durch Schleifen entfernt, so daß die verkaufsfähige Spanplatte dann den Aufbau aufweist, wie er in Figur 2 dargestellt ist.

## Patentansprüche

1. Verfahren zur Herstellung von mehrschichtigen Spanplatten durch Heißverpressen von mit Bindemitteln versetzten Holzspänen, wobei in der Kernschicht (1) Isocyanat als Bindemittel in Kombination mit formaldehydbindenden Mitteln, wie Harnstoff, Melamin, Dicyandiamid o. dgl. eingesetzt wird, dadurch gekennzeichnet, daß in Deckschichten (2) Isocyanat als Bindemittel verwendet wird, und daß außen Trenndeckschichten (3), die mit Phenolharz gebunden sind, aufgebracht und nach dem Aushärten wieder entfernt werden.

2. Verfahren nach Anspruch 1, dadurch gekennzeichnet, daß die Trenndeckschichten (3) ganz und die Deckschichten (2) teilweise entfernt werden.

3. Verfahren nach Anspruch 1 oder 2, dadurch gekennzeichnet, daß die Entfernung der Trenndeckschichten (3) und die teilweise Entfernung der Deckschichten (2) durch Schleifen erfolgt.

4. Verfahren nach Anspruch 1, dadurch gekennzeichnet, daß auch in den Deckschichten (2) ein formaldehydbindendes Mittel, wie Harnstoff, Melamin, Diisocyanat o. dgl. zugesetzt wird.

5. Verfahren nach Anspruch 1 bis 4, dadurch gekennzeichent, daß die Trenndeckschichten (3) und die Deckschichten (2) so eingesetzt werden, daß nach dem Heißverpressen die Trenndeckschichten (3) eine Dicke von 0,2 bis 0,7 - vorzugsweise 0,3 bis 0,6 mm - und die Deckschichten (2) eine Dicke von 1,0 bis 1,5 mm aufweisen.

## Claims

1. A method for producing multilayered particelboard by hot-pressing of wooden chips to which resins have been added, where isocyanate is used in combination with formaldehyde bonding additives, such as e. g. urea, melamine or dicyandiamide, in the middle layer (1), wherein in covering layers (2) isocyanate is used as resin, and outer protective layers (3), which are bonded with phenolic resin, are applied and removed after hardening.

2. A method according to claim 1, wherein the protective layers (3) are removed fully and the covering layers (2) partially.

3. A method according to claim 1 or 2, wherein the removal of the protective layers (3) and the partial removal of the covering layers (2) is done by grinding.

4. A method according to claim 1, wherein a formaldehyde bonding additive, such as urea, melamine, diisocyanate or similar is applied to the covering layers (2) also.

5. A method according to claims 1 to 4, wherein protective layers (3) and covering layers (2) are used in such a way that the protective layers (3) have a thickness of 0.2 mm - 0.7 mm --preferably 0.3 mm - 0.6 mm -- and that the covering layers (2) have a thickness of 1.0 mm - 1.5 mm after hot pressing.

## Revendications

1. Procédé de fabrication de panneaux de particules multicouches, par compression à chaud de particules de bois mélangées à des liants, avec utilisation dans la couche de noyau (1) d'isocyanate comme liant, en combinaison avec des produits donnant des combinaisons formaldéhyde, tels que l'urée, la mélamine, le dicyandiamide, ou analogue, caractérisé en ce qu'est utilisé dans les couches de couverture (2) de l'isocyanate comme liant et en ce que des couches de couverture à séparer (3), liées à l'aide d'une résine phénolique, sont appliquées puis de nouveau enlevées après durcissement.

2. Procédé selon la revendication 1, caractérisé en ce que les couches de couverture à séparer (3) sont enlevées en totalité et les couches de couverture (2) sont enlevées partiellement.

3. Procédé selon la revendication 1 ou 2, caractérisé en ce que l'enlèvement des couches de couverture à séparer (3) et l'enlèvement partiel des couches de couverture (2) s'effectuent par meulage.

4. Procédé selon la revendication 1, caractérisé en ce qu'un produit donnant une liaison formaldéhyde, tel que l'urée la mélamine, le diisocyanate ou analogue, est également utilisés dans les couches de couverture (2).

5. Procédé selon les revendications 1 à 4, caractérisé en ce que les couches de couverture à séparer (3) et les couches de couverture (2) sont mises en oeuvre de manière qu'après la compression à chaud, les couches de couverture à séparer (3) aient une épaisseur de 0,2 à 0,7 mm - de préférence de 0,3 à 0,6 mm - et les couches de couverture (2) aient une épaisseur de 1,0 à 1,5 mm.
